# FASCICULE DE BREVET EUROPEEN

(11) **EP 2 755 072 B1**
(45) Date de publication et mention de la délivrance du brevet: **29.07.2015**
(21) Numéro de dépôt: 13196049.4
(22) Date de dépôt: 06.12.2013
(51) Int. Cl.: G02B 7/00, G01M 11/00, G01M 11/02, G02B 27/62, H04N 17/00

(54) **Dispositif de contrôle optique d'un système d'imagerie**
Optische Kontrollvorrichtung eines Bildgebungssystems
Device for optical control of an imaging system

(30) Priorité: 11.01.2013 FR 1300047
(43) Date de publication de la demande: 16.07.2014
(73) Titulaire: Thales, 92200 Neuilly Sur Seine (FR)
(72) Inventeur: Blanc, Jean-François, 06210 MANDELIEU (FR); Houairi, Kamel, 06400 CANNES (FR); Garin, Stéphane, 06350 LA ROQUETTE SUR SIAGNES (FR); Bernot, Marc, 06150 CANNES LA BOCCA (FR); Liotard, Arnaud, 06130 GRASSE (FR); Devilliers, Christophe, 06130 GRASSE (FR)
(74) Mandataire: Joubert, Cécile

(56) Documents cités:
- US-A- 3 942 894
- US-A1- 2006 098 276

## Description

### DOMAINE DE L'INVENTION

L'invention concerne les systèmes optiques d'imagerie et en particulier les systèmes optiques d'imagerie haute résolution. Plus précisément, l'invention concerne un dispositif de contrôle optique de ces systèmes optiques d'imagerie.

### ETAT DE LA TECHNIQUE

La publication US 2006/098276 A1 décrit un dispositif pertinent. Pour fonctionner de manière satisfaisante, un système optique d'imagerie doit présenter une bonne qualité optique, par exemple au niveau de la qualité de surface d'onde et de la stabilité de l'axe de visée.
Lorsqu'un système d'imagerie présente une bonne qualité de surface d'onde, un point de la scène forme dans le plan image un point image présentant une répartition d'intensité lumineuse présentant une dimension essentiellement limitée par la résolution intrinsèque du système d'imagerie (limite de diffraction). Tout défaut ou mauvais positionnement des surfaces optiques qui composent le système d'imagerie implique un défaut de surface d'onde qui se traduit par une augmentation de la dimension du point image et une diminution de la résolution du système.
De manière générale, un système initialement correctement réglé peut présenter une dérive de la qualité de sa surface d'onde au fur et à mesure de son fonctionnement.
Pour des systèmes d'imagerie embarqués sur des satellites pour observer la terre, tels des instruments comme des télescopes à haute résolution, un suivi de l'évolution de la surface d'onde est nécessaire pour garantir la qualité des images enregistrées.
Une méthode pour mesurer la surface d'onde est d'acquérir fréquemment des images de calibration afin de suivre l'évolution de la surface d'onde.
Ces images de calibration peuvent être obtenues par exemple en réalisant des prises de vue spécifiques sur de scènes externes spécifiques : sites sol dédiés, étoiles.

Une autre solution connue est de munir l'instrument d'un système d'auto-calibration comprenant un miroir mobile de tête qui, pour la calibration, est orienté vers une cible interne.
Ces solutions présentent l'inconvénient de nécessiter une programmation spécifique du satellite qui peut être à une cadence élevée, par exemple toutes les 20 mn, chaque mesure nécessitant un arrêt des programmations nominales du satellite et éventuellement un déplacement de pièces mobiles. Ainsi l'acquisition d'images de calibration conduit à de fortes contraintes opérationnelles.

Par ailleurs, pour fonctionner de manière satisfaisante, un système optique d'imagerie doit présenter une bonne stabilité de ligne de visée. Cette stabilité est à considérer à l'échelle du temps d'intégration pour éviter le « flou des images » pendant le temps d'intégration et à plus long terme pour restituer avec précision la localisation des scènes observées .
Ces instabilités de la ligne de visée sont d'autant plus importante que l'IFOV (acronyme anglo-saxon de Instantaneous Field of View) est faible. Pour les instruments embarqués, les instabilités les plus importantes sont d'origine vibratoire ; elles dimensionnent la performance de stabilité mico-vibratoire de la plateforme. D'autres instabilités sont d'origine thermo-élastique, elles dimensionnent la performance de stabilité thermo-élastique de l'imageur .

Le but de la présente invention est de remédier aux inconvénients précités.

### DESCRIPTION DE L'INVENTION

Il est proposé, selon un aspect de l'invention, un dispositif de contrôle optique d'un système optique d'imagerie présentant un plan focal (Pf), un axe optique (z), une pupille d'entrée, le système formant une image d'une scène sensiblement à l'infini sur au moins un détecteur d'image disposé sensiblement dans le plan focal (Pf), le dispositif comprenant :
- au moins une source émettrice quasi ponctuelle disposée en périphérie du détecteur et sensiblement dans le plan focal,
- un élément réfléchissant et de surface plane,
- l'élément étant disposé en amont du système d'imagerie en considérant le sens de propagation des rayons lumineux provenant de la scène, et selon une position et une inclinaison telles qu'une image de contrôle de la source réalisée par le système optique et réfléchie par l'élément soit disposée sensiblement dans le plan focal sur un élément de détection relié à des moyens d'analyse de l'image de contrôle permettant d'identifier d'éventuels défauts optiques,
- l'élément (10) présentant une forme annulaire de manière à laisser passer des rayons lumineux issus de la scène et traversant la pupille d'entrée.

Selon un mode préféré, l'élément de détection du dispositif de contrôle optique comprend un capteur disposé en périphérie du détecteur image. Selon un autre mode de réalisation l'élément de détection comprend un détecteur image.
Avantageusement le système optique comprend un télescope comprenant au moins un premier miroir collecteur asphérique et un deuxième miroir. Selon un mode préféré le système optique comprend un télescope de type « TMA » pour Three Mirror Anastigmat.
Selon une variante, l'élément est disposé autour du deuxième miroir
Selon une autre variante, l'élément est disposé à une distance proche du premier miroir de manière à minimiser l'effet de diminution du diamètre utile de ladite pupille d'entrée.

Selon un mode de réalisation, la source du dispositif comprend une première fibre optique disposée dans un premier plan perpendiculaire à l'axe optique et une deuxième fibre optique disposée dans un deuxième plan parallèle au premier plan et décalé par rapport à ce premier plan, le premier et deuxième plan étant disposés au voisinage du plan focal, les deux images de contrôle défocalisées permettant de déterminer un signe de l'aberration optique du système d'imagerie.

Avantageusement, le capteur est un capteur par diversité de phase.

Avantageusement le capteur effectue une première mesure de calibration de l'image de contrôle lorsque le système d'imagerie présente une qualité optique déterminée et au moins une deuxième mesure de l'image de contrôle réalisée après une période de fonctionnement du système d'imagerie, les moyens d'analyse étant adaptés pour identifier un défaut optique par comparaison entre les première et deuxième mesure de l'image de contrôle.

Avantageusement le dispositif est adapté pour identifier une défocalisation du système d'imagerie.

Avantageusement le dispositif est adapté pour identifier un désalignement d'un axe de visée du système d'imagerie.

Selon un autre aspect de l'invention, il est également proposé un système d'imagerie optique comprenant un dispositif de contrôle optique tel que décrit précédemment.

Selon un autre aspect de l'invention, il est également proposé un système optique d'imagerie actif comprenant un dispositif de contrôle optique tel que décrit précédemment.
Avantageusement, le système d'imagerie est actif et comprend en outre des moyens de commande aptes à commander un actuateur apte à effectuer une modification du système optique d'imagerie de manière à corriger au moins partiellement le défaut.

Avantageusement , le défaut comprend une défocalisation et l'actuateur est apte à commander un déplacement d'un élément optique de manière à corriger la défocalisation.

Avantageusement, le défaut comprend un désalignement d'un axe de visée et comprenant en outre des moyens de commande aptes à commander un actuateur de type miroir mobile en rotation de manière à modifier angulairement l'axe de visée afin de corriger le désalignement.

D'autres caractéristiques, buts et avantages de la présente invention apparaîtront à la lecture de la description détaillée qui va suivre et en regards des dessins annexés données à titre d'exemples non limitatifs et sur lesquels :
- la figure 1 illustre schématiquement le principe de l'autocollimation.
- la figure 2 illustre schématiquement une configuration optique où le miroir plan est incliné par rapport à l'axe optique.
- la figure 3 illustre schématiquement un dispositif selon l'invention.
- la figure 4 illustre schématiquement un cas particulier du dispositif selon l'invention dans lequel l'élément réfléchissant est en autocollimation.
- la figure 5 illustre un dispositif selon l'invention selon une variante de réalisation de l'invention.
- la figure 6 illustre un schématiquement un système d'imagerie embarqué constitué d'un télescope de type Korsch selon l'état de la technique.
- la figure 7 illustre un dispositif selon l'invention selon un premier mode de réalisation.
- la figure 8 illustre un dispositif selon l'invention selon un deuxième mode de réalisation.
- la figure 9 illustre la dépendance entre l'image correspondant à une pupille pleine et l'image correspondant à une pupille annulaire.
- la figure 10 illustre un exemple d'arrangement du plan focal d'un système d'imagerie comprenant une pluralité de barrettes unidimensionnelles et comprenant un dispositif selon l'invention.
- la figure 11 représente un système d'imagerie actif comprenant des moyens de commande et un actuateur apte à commander un déplacement du deuxième miroir du système d'imagerie.
- la figure 12 représente un système d'imagerie actif comprenant des moyens de commande et un miroir mobile en rotation apte à modifier angulairement l'axe de visée du système d'imagerie.

### DESCRIPTION DETAILLEE DE L'INVENTION

Avant de décrire l'invention nous rappellons la notion d'autocollimation.

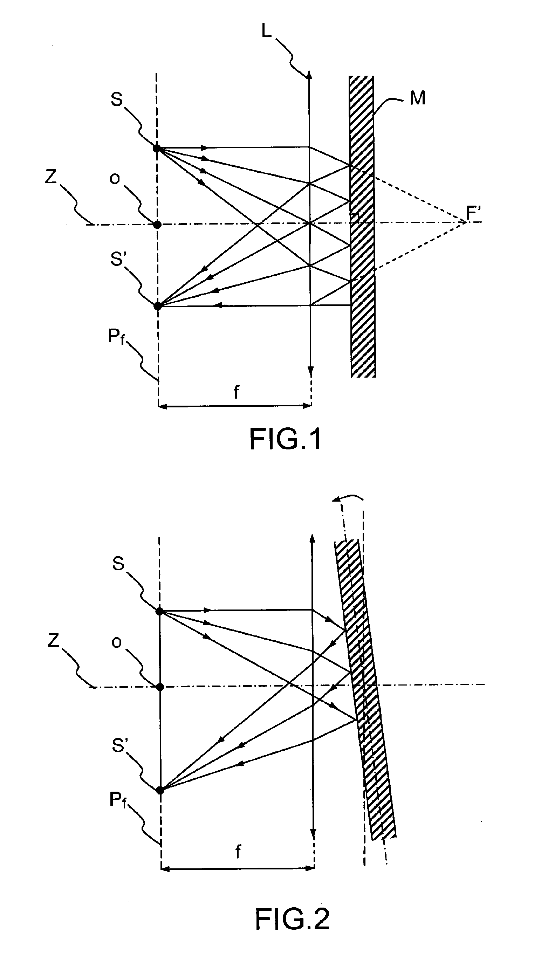

La figure 1 décrit un miroir M en autocollimation par rapport à un système optique convergent L de plan focal Pf et de focale f. Dans cette configuration, l'image d'un point S émissif disposé dans le plan focal Pf formée par l'optique L et réfléchie par le miroir M est disposée en S', également dans le plan focal et symétriquement au point O, qui est le point pour lequel l'axe optique coupe le plan focal.

La figure 2 illustre le cas dans lequel le miroir M est incliné par rapport à la position d'autocollimation. L'image S' de S est toujours dans le plan focal mais à une distance de O fonction de l'inclinaison du miroir M.

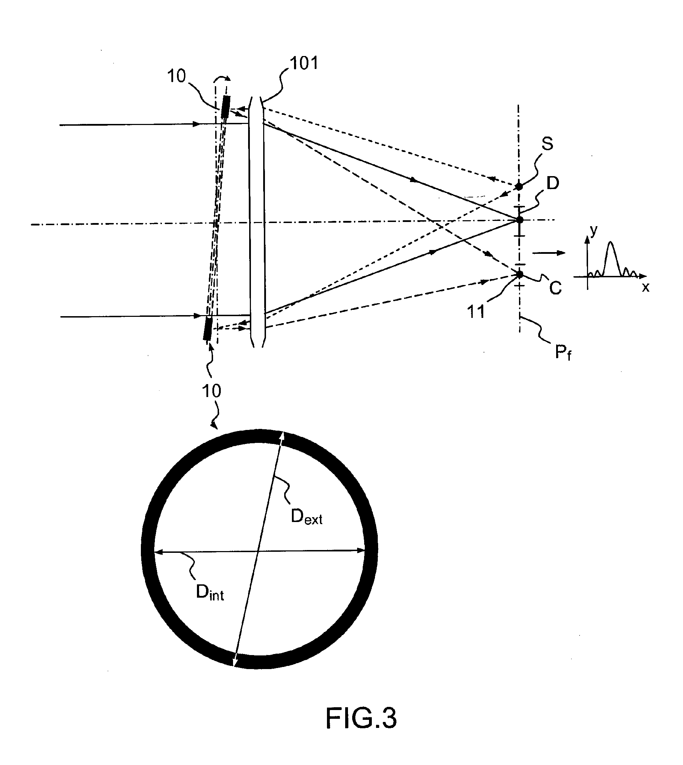

La figure 3 illustre schématiquement un dispositif 1 selon l'invention. Le dispositif 1 effectue un contrôle optique d'un système d'imagerie 101. De manière classique, le système d'imagerie 101 présente un axe optique z et une pupille d'entrée.
Le système d'imagerie 101 est apte former une image d'une scène sensiblement à l'infini dans son plan focal Pf, selon un fonctionnement dénommé mode « infini/foyer ».
Au moins un détecteur image D est disposé dans le plan focal Pf pour détecter l'image de la scène observée. Un détecteur image D est par exemple une barrette ou une matrice de pixels. Préférentiellement le système d'imagerie est un système à très haute résolution.
En fonctionnent, le détecteur image D reçoit des rayons lumineux provenant de tous les points de la scène.
Le dispositif de contrôle optique selon l'invention comprend une source S émettrice de lumière et quasi ponctuelle disposées dans le plan focal Pf, et en périphérie du détecteur image D.
La source S est suffisamment proche du détecteur D pour qu'une partie des rayons lumineux émis traversent le système optique d'imagerie en sens inverse des rayons lumineux provenant de la scène.

Le dispositif de contrôle de surface selon l'invention comprend également un élément réfléchissant 10 présentant une surface plane. La surface plane est de qualité optique moyenne, typiquement λ/20 (λ longueur d'onde de l'onde lumineuse utilisée).

L'élément 10 est disposé en amont du système d'imagerie 101 en considérant le sens de propagation des rayons lumineux provenant de la scène. Ainsi les rayons issus de la source S disposée dans le plan focal et ayant traversé le système 101 forment une onde plane qui est réfléchie par l'élément 10.
L'élément 10 est disposé selon une position et une inclinaison par rapport à l'axe optique z telles qu'une image de contrôle 11 de la source S réalisée par le système optique 101 et réfléchie par l'élément 10 est disposée dans le plan focal Pf sur un élément de détection C relié à des moyens d'analyse de l'image de contrôle 11. Typiquement l'inclinaison est très faible et dépend de la combinaison optique du système d'imagerie ainsi que de sa focale.
Ainsi l'élément réfléchissant 10 réalise, en combinaison avec le système d'imagerie 101, une image de la source S sur l'élément de détection C, selon une image de contrôle 11.
Une analyse de l'image de contrôle 11 permet l'identification d'éventuels défauts optiques. En effet les rayons qui forment l'image de contrôle 11 ont traversé deux fois le système optique 101 et l'image de contrôle présente des défauts similaires à ceux de l'image par le système optique 101 d'un point de la scène à l'infini sur le détecteur image D. Le contrôle optique d'onde s'effectue à l'aide de l'image de contrôle 11, « témoin » de la qualité du système.
Plusieurs positions de l'élément 10 sont possibles, comme décrit plus loin.
Pour ne pas perturber le fonctionnement du système optique 101, l'élément 10 présente une forme annulaire telle qu'il laisse passer des rayons lumineux issus de la scène et traversant la pupille d'entrée du système optique 101. En d'autres termes, l'élément 10 a une forme annulaire telle qu'il n'obture pas complètement, et préférentiellement qu'il obture un minimum le chemin optique des rayons issus de la scène et pénétrant dans la pupille d'entrée pour former l'image sur le détecteur image D.
La forme annulaire en couronne, comprend un petit diamètre ou diamètre interne Dint et un grand diamètre ou diamètre externe Dext.
Un avantage du système est que le contrôle s'opère sans adjonction et déplacement d'une pièce mobile telle un miroir ou un cache, et sans avoir recours à un programme de dépointage spécifique pour un système d'imagerie embarqué sur un satellite, le contrôle s'effectuant sans modification des conditions de fonctionnement du système d'imagerie. Le dispositif selon l'invention est autonome.

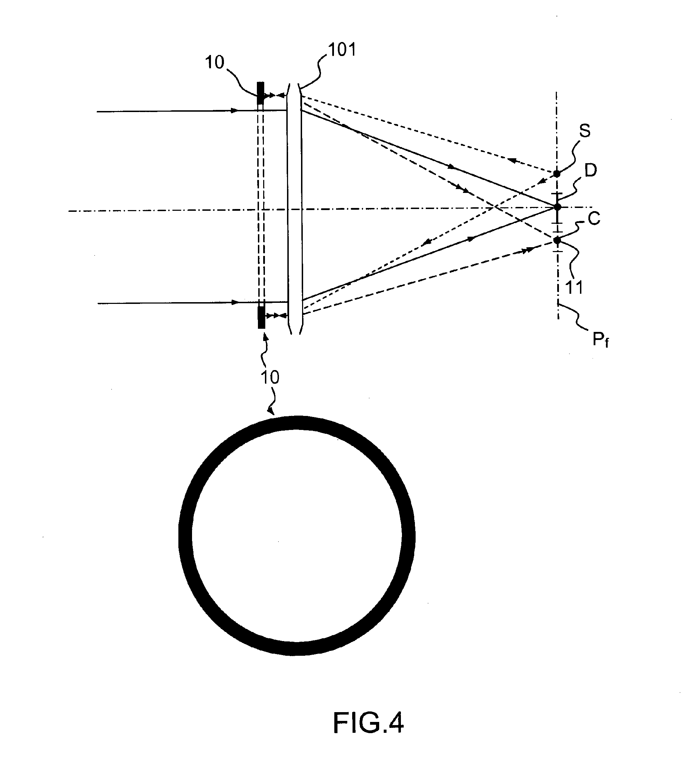

Selon une variante, l'élément de détection C est disposé en périphérie du détecteur image D.
Un avantage du dispositif selon cette variante consiste dans le fait que la qualité optique du système optique 101 est contrôlée sans perturber le fonctionnement du système, la source S, l'élément de détection C et l'élément réfléchissant 10 étant configurés pour générer une image de contrôle en obturant un minimum, préférentiellement pas du tout, le chemin optique suivi par les rayons lumineux issus de la scène. Cette variante ne nécessite pas de programmation spécifique du système pour un arrêt de son fonctionnement. La mesure peut ainsi s'effectuer selon un temps de pose très long, et donc avec un très faible rapport signal/bruit, ce qui permet une bonne précision de mesure et un large choix de capteur C.
Un cas particulier illustré figure 4 correspond à l'élément réfléchissant annulaire 10 disposé en autocollimation. L'élément de détection C est alors positionné symétriquement à S par rapport à l'axe optique z. Un avantage consiste en un réglage simplifié du dispositif 1 intégré dans le système d'imagerie 101.

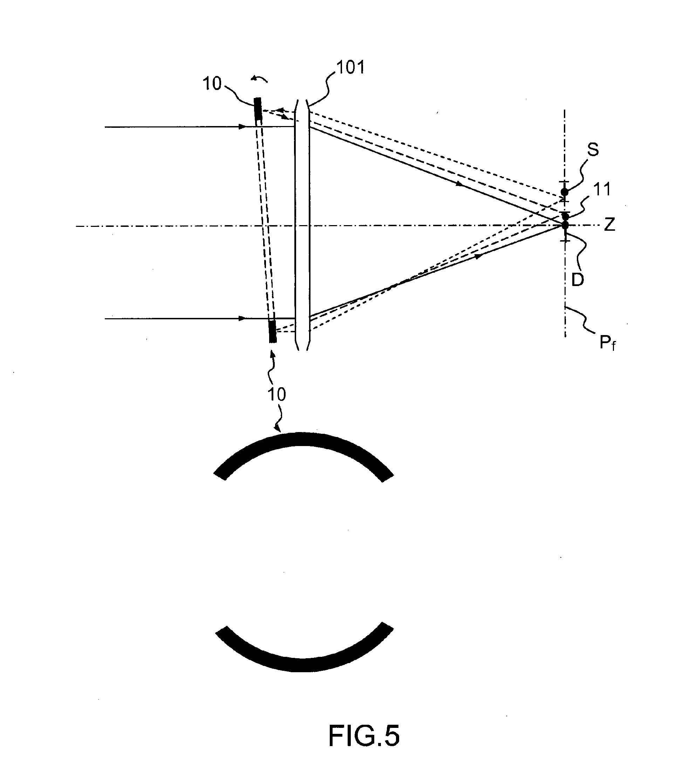

Selon une autre variante illustrée sur la figure 5, l'élément de détection est constitué par un détecteur image D. L'avantage consiste en ce qu'il n'y pas d'élément additionnel disposé dans le plan focal. Le contrôle peut être réalisé hors prise d'image ou pendant la prise d'image. Dans le premier cas, la source S est désactivée pendant les acquisitions par le détecteur D. Dans le second cas, on admet d'ajouter la tâche de contrôle à l'image acquise. Ce second cas est particulièrement adapté pour un contrôle optique consistant en l'identification d'un désalignement de la ligne de visé.

Selon une variante préférée, la forme annulaire est continue.
Selon une autre variante également illustré figure 5, la forme annulaire est constituée d'au moins deux parties symétriques par rapport à l'axe optique. Selon une variante préférée, le système d'imagerie est un télescope comprenant au moins un premier miroir collecteur asphérique M1 et un deuxième miroir M2. Selon une variante préférée, le télescope est de type Three Mirror Anastigmat selon l'acronyme anglo-saxon TMA, préférentiellement un télescope TMA de type Korsch. Pour ces télescopes, la pupille d'entrée est disposée sur le premier miroir M1.
Selon un autre exemple le télescope est de type Cassegrain.
Ces télescopes sont par exemple embarqués à bord de satellites pour observer la Terre.

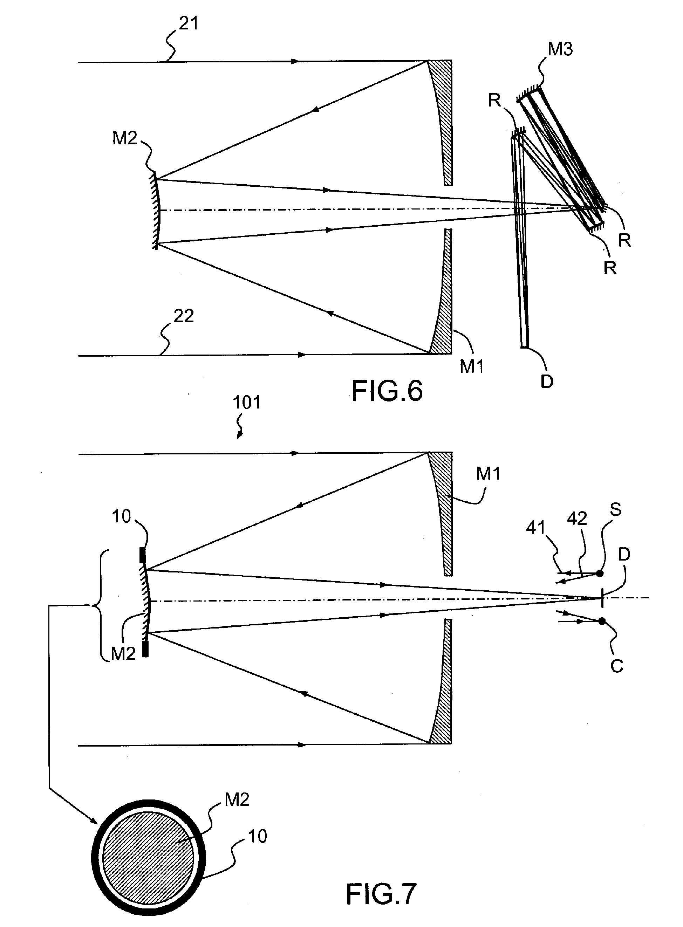

La figure 6 illustre schématiquement un télescope embarqué de type Korsch selon l'état de la technique. Deux rayons lumineux 21 et 22 issus de la scène observée située à l'infini sont collectés par le premier miroir asphérique M1 qui concentre les rayons sur un deuxième miroir M2. Par exemple le miroir M1 a une dimension de 1 à 4 m. Le deuxième miroir M2 focalise les rayons en un plan focal intermédiaire. En partie arrière, un miroir M3 hors d'axe image le plan focal intermédiaire au plan focal image dans lequel sont disposés les détecteurs image D. La focale de l'ensemble est longue, typiquement 15 à 70 m. Des miroirs de renvois R replient les rayons.
La distance M1 M2 est typiquement égale à 1 à 3 fois le diamètre du premier miroir M1.

Nous allons à présent décrire à titre d'exemple deux modes de réalisation du dispositif selon l'invention pour un télescope tel que décrit précédemment.

Un premier mode de réalisation préféré illustré sur la figure 7 comprend un élément réfléchissant annulaire 10 disposée autour du deuxième miroir M2 de diamètre D(M2). Préférentiellement la couronne a un petit diamètre Dint sensiblement égal diamètre du miroir M2 D(M2) pour minimiser l'encombrement. En variante, l'élément 10 est solidaire du miroir M2. Préférentiellement le diamètre externe Dext est optimisé pour limiter l'obturation centrale du télescope tout en permettant d'atteindre la précision recherchée du dispositif de contrôle. Plus la largeur de l'anneau est faible, plus la tache de contrôle est résolue mais moins il y a de flux reçu par l'élément de détection. Un exemple de dimensionnement pour un miroir M2 de 300 mm est un anneau de 10mm à 20mm soit typiquement un diamètre extérieur Dext de l'ordre respectivement de Dint + 5% à Dint +15%.

Le chemin optique suivi par les rayons émis par la source S est : S / M2 / M1 / élément 10 / M1 / M2 / S.

L'inclinaison de l'élément réfléchissant est variable suivant la position relative de la source S et du capteur C de part et d'autre de l'axe optique z. Pour un télescope de 1 ° de champ, elle peut varier de 0 ° à 1 °.

Un avantage du premier mode de réalisation dans lequel l'élément 10 est disposé autour de M2 consiste dans le fait qu'il est apte à faire partie intégrante du miroir M2. Un autre avantage consiste en ce que l'élément 10 est stable, peu influencé par l'évolution du flux thermique interne à la cavité formée par M1/M2.

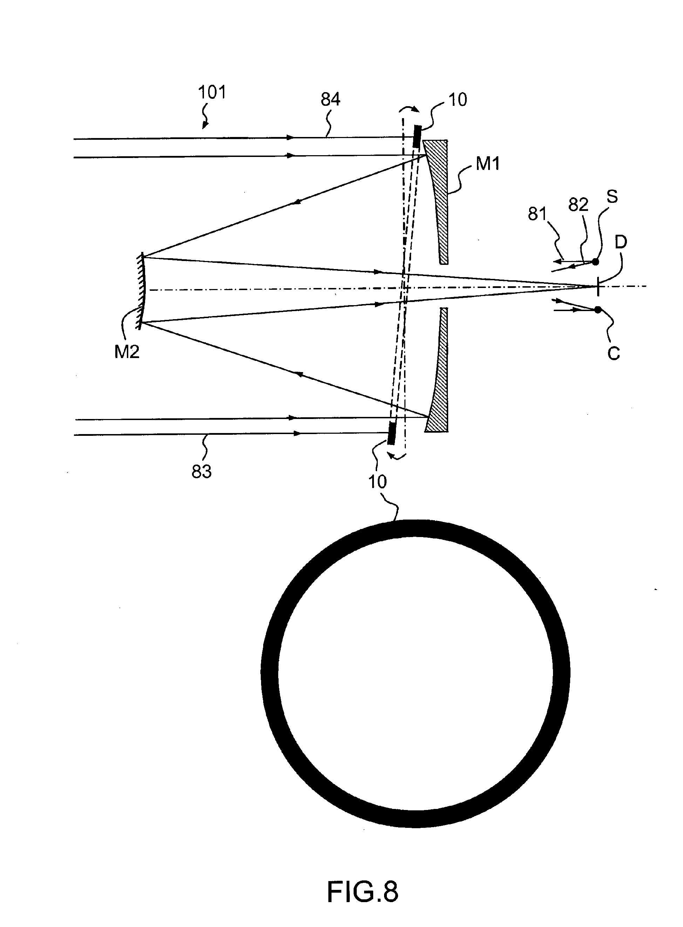

Un deuxième mode de réalisation préféré illustré figure 8 comprend un élément réfléchissant 10, disposé à une distance proche de l'élément 10 du premier miroir M1 afin de minimiser l'effet de diminution du diamètre utile de la pupille d'entrée du télescope.
Les rayons 81, 82 issus de la source S se réfléchissent sur M2, puis sur M1, puis sur l'élément 10 disposé en amont de M1. Le chemin optique suivi par les rayons émis par la source S est S / M2 / M1 / élément 10 M1 / M2 / S. Selon ce mode de réalisation, l'élément 10 obture les rayons 83, 84 les plus périphériques incidents sur M1 et issus de la scène.
Les rayons issus de la scène observée effectuent le chemin optique :
Infini / M1 / M2 / D.
L'inclinaison de l'élément 10 annulaire dépend de la position relative de la source S et du capteur C de part et d'autre de l'axe optique. Par exemple, pour un télescope de 1 ° de champ, l'inclinaison est inférieure ou égale à 1 °. Préférentiellement dans ce mode de réalisation l'élément annulaire 10 a un grand diamètre Dext sensiblement égal au diamètre du miroir M1 D(M1). Préférentiellement le diamètre interne Dint de la couronne est minimisé pour réduire l'impact sur le diamètre utile du télescope. En outre, plus la largeur de l'anneau est faible, plus la tache de contrôle est résolue, mais moins il ya de flux reçu par l'élément de détection. Un exemple de dimensionnement pour un miroir M1 de 3000mm de diamètre est un anneau de 10 mm à 40 mm d'épaisseur.

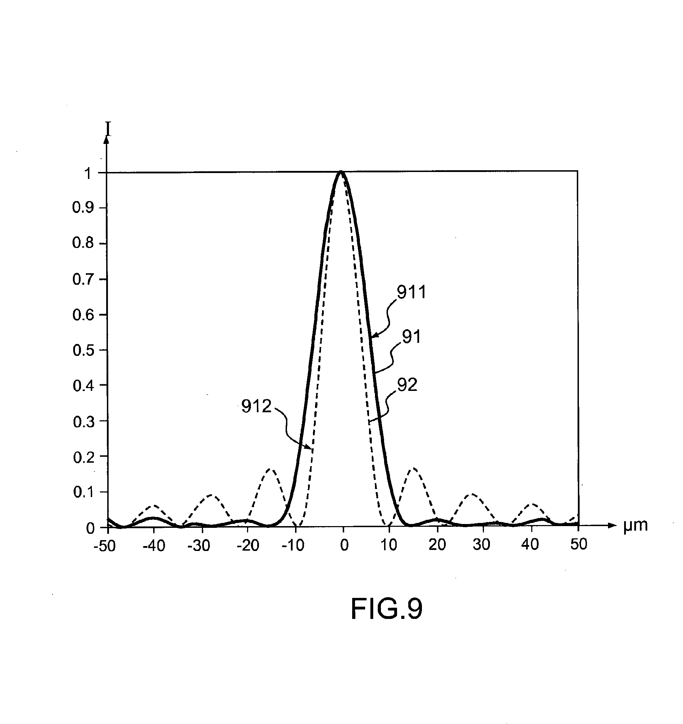

La figure 9 illustre la dépendance entre l'image réalisée par une pupille annulaire et l'image réalisée pleine pupille, pour une même optique convergente de focale f égale à 30 m. La courbe 91 correspond à la tâche de diffraction 911 obtenue à partir d'une pupille pleine de diamètre 1.5 m, et la courbe 92 correspond à la tâche de diffraction 912 correspondant à une pupille annulaire dont la largeur de l'anneau est égal à 2% du diamètre de la pupille. La largeur à mi-hauteur de la tâche d'Airy 912 (anneau) est proche de la largeur à mi-hauteur de la tâche d'Airy 911 (pleine pupille). Cette propriété des pupilles annulaires est mise à profit pour réaliser un contrôle optique fin de la déformation de la tâche afin de suivre et de corriger l'évolution de la focalisation. Selon un autre exemple, cette propriété réalise un contrôle du déplacement de la tâche afin de suivre et de corriger l'évolution de la ligne de visée. En variante les deux types d'évolution sont contrôlés simultanément.

De manière générale, plus l'élément réfléchissant 10 de forme annulaire est fin, plus le diamètre de la tâche d'Airy est faible, ce qui permet une meilleure sensibilité du dispositif. Cependant, un anneau fin réfléchi une plus faible quantité de flux, et la sensibilité du détecteur doit être adaptée en conséquence. Ainsi, les dimensions des diamètres intérieurs et extérieurs Dint et Dext de l'anneau 10 résultent d'un compromis entre contraintes d'encombrement, résolution souhaitée et sensibilité du détecteur.

Pour obtenir une image de contrôle 11 de faible dimension, la source S doit être ponctuelle ou quasi ponctuelle. Avantageusement la source comprend au moins une fibre optique, qui présente un faible encombrement et permet un grand choix de longueur d'onde d'émission. A titre d'exemple, une fibre optique présente une dimension émissive de 5 µm à 100 µm. Avantageusement, le système comprend deux fibres optiques proches l'une de l'autre de légèrement défocalisées, c'est à dire positionnées au voisinage mais pas exactement dans le plan focal Pf, une première fibre étant disposée dans un premier plan perpendiculaire à l'axe optique et une deuxième fibre dans un deuxième plan parallèle au premier plan et décalé par rapport à ce premier plan, permettant de créer deux images de contrôle défocalisées, dont l'analyse conjointe permet de déterminer un signe de l'aberration optique du système d'imagerie.

Selon une variante, le système d'imagerie est en fonctionnement lorsque le contrôle de surface d'onde est opéré avec le dispositif selon l'invention. Cette variante nécessite un élément de détection C différent du détecteur image D et disposé en périphérie de celui-ci. La source ne doit pas augmenter le niveau de lumière parasite dans le système optique d'imagerie 101. Avantageusement le système d'imagerie 101 fonctionne pour les longueurs d'onde dans la lumière visible et la source S émet dans les longueurs d'onde différentes, auxquelles le détecteur D est moins sensible, pour minimiser la lumière parasite introduite dans le système 101.

Selon une autre variante, l'observation réalisée par le système d'imagerie 101 est arrêtée pendant que le contrôle de la surface d'onde est opéré par le dispositif selon l'invention. Cette variante est compatible avec un élément de détection confondu avec un des détecteur images D.

Le capteur C doit être capable de détecter la répartition lumineuse de l'image de contrôle 11. Le capteur C peut être un détecteur matriciel, un détecteur quatre cadrans, un capteur linéaire, un capteur par diversité de phase.
Le type de capteur dépend du type de défaut que l'on souhaite contrôler.

Une méthode de contrôle est fondée sur une comparaison entre une première mesure de l'image de contrôle 11 dénommée mesure de calibration, effectuée lorsque le système d'imagerie 101 présente une qualité optique déterminée et jugée satisfaisante, et au moins une deuxième mesure de l'image de contrôle 11 réalisée après une période de fonctionnement du système.
En variante, le système est en fonctionnement lorsque la deuxième mesure est réalisée. Selon une autre variante le système est momentanément arrêté lorsque la deuxième mesure est réalisée.

Un premier exemple de type de défaut contrôlable par le dispositif selon l'invention est un défaut de surface d'onde tel une défocalisation. A partir d'une mesure de la variation de la dimension de l'image de contrôle on en déduit l'existence de défaut à l'origine de la détérioration de la qualité de la surface d'onde. A titre d'exemple un défaut de défocalisation peut être détecté à partir des première et deuxième mesures.

Un deuxième exemple de type de défaut contrôlable par le dispositif selon l'invention est un désalignement de l'axe de visée, qui induit un déplacement de la position de l'image de contrôle 11 dans le plan focal Pf. A partir d'une mesure du déplacement de l'image de contrôle 11 on en déduit l'existence d'un défaut d'alignement. A titre d'exemple un désalignement peut être détecté à partir d'une première mesure correspondant au système d'imagerie 101 aligné et une deuxième mesure correspondant au système d'imagerie présentant un désalignement de l'axe de visée. Une mesure de déplacement de la position de l'image de contrôle est compatible avec l'utilisation d'un détecteur quatre cadran comme élément de détection C.

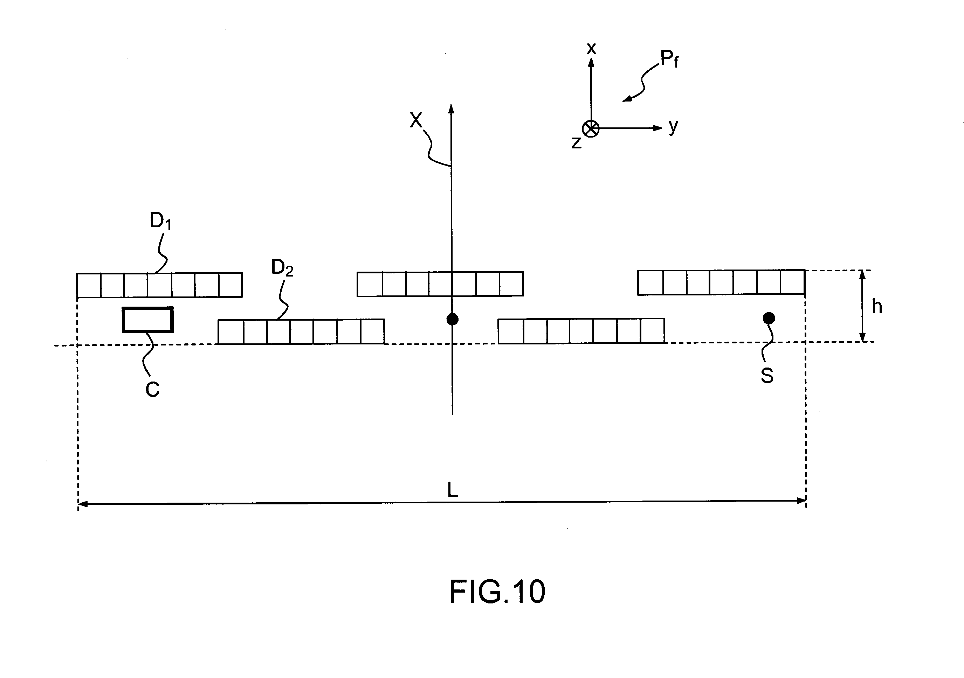

Selon un autre aspect de l'invention, il est également proposé un système optique d'imagerie 101 comprenant un dispositif de contrôle optique tel que décrit précédemment.
Le système optique d'imagerie 101 est par exemple un télescope haute résolution d'observation de la terre (résolution sol 20 à 50 cm) embarqué sur un satellite. Un exemple d'arrangement du plan focal Pf d'un tel système 101 comprenant un dispositif selon l'invention est représenté sur la figure 10. Le détecteur image D est composé d'une pluralité de capteurs linéaires ou matriciels D1, D2 etc... Par exemple une rétine composée de 5 capteurs linéaires de 6000 points de 13 µm de pas présente une longueur L d'environ 500 mm pour une hauteur h d'environ 50 mm.
Le défilement de la scène s'opère selon l'axe x. La source S et l'élément de détection C du dispositif 1 selon l'invention sont disposés de part et d'autre de l'axe optique z dans le plan focal Pf comme représenté sur la figure 10.

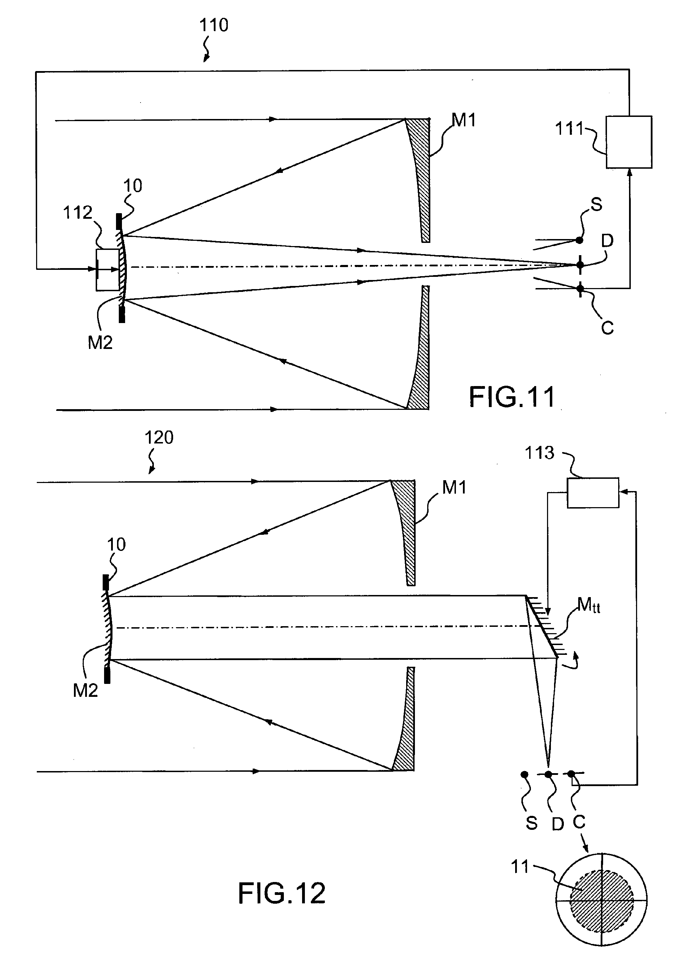

Avantageusement, le système d'imagerie 110 représenté sur la figure 11 est actif et comprend en outre des moyens de commande 111 aptes à commander un actuateur 112 apte à effectuer une modification du système optique d'imagerie 110 de manière à corriger au moins partiellement le défaut identifié par l'analyse d'une ou plusieurs images de contrôle.

A titre d'exemple sur la figure 11 est représenté un système d'imagerie actif 110 comprenant un premier miroir M1 et un deuxième miroir M2 tel que décrit précédemment. Le type de défaut mesuré comprend une défocalisation et l'actuateur 112 est apte à commander un déplacement d'un élément optique, par exemple le deuxième miroir M2, de manière à corriger la défocalisation.
Le processus peut s'opérer de manière itérative selon une boucle, en effectuant pour chaque déplacement de l'actuateur une mesure de l'image de contrôle 11 jusqu'à ce que l'image de contrôle atteigne une dimension prédéterminée ou soit de dimension similaire à une l'image de calibration précédemment enregistrée.

Avantageusement, le système d'imagerie 120 représenté sur la figure 12 est actif et le défaut détecté par le dispositif selon l'invention comprend un désalignement de l'axe de visée par exemple en utilisant un élément de détection C tel un détecteur quatre cadrans. L'évolution de l'axe de visée se traduit par un décentrage de la l'image de contrôle reçue par le détecteur C. Les moyens d'analyse couplés à l'élément de détection identifient l'amplitude et le sens du déplacement. Le système d'imagerie 120 comprend en outre des moyens de commande 113 aptes à commander un actuateur de type miroir Mtt mobile en rotation ou miroir Tip-Tilt selon l'acronyme anglo saxon, de manière à modifier angulairement l'axe de visée afin de corriger le désalignement. Le miroir Mtt mobile est disposé préférentiellement sur la pupille de sortie du système d'imagerie.
Le processus peut s'opérer de manière itérative selon une boucle, en effectuant pour chaque déplacement du miroir Mtt une mesure du centrage de l'image de contrôle 11 jusqu'à ce que l'image de contrôle soit centrée. La bande passante de la boucle d'asservissement est à adapter à la fréquence de la perturbation que l'on souhaite corriger.

En variante, les deux types de boucles sont implémentés dans le système optique d'imagerie actif et le défaut comprend une défocalisation et un désalignement de la ligne de visée. Selon un mode de réalisation, la source S et le capteur C sont communs aux deux boucles.

Selon un autre mode de réalisation, le système comprend deux capteurs C spécialisés, l'un pour le contrôle de la surface d'onde et l'autre pour le contrôle de la ligne de visée.

## Revendications

1. Système optique d'imagerie (101) présentant un plan focal (Pf), un axe optique (z), une pupille d'entrée, ledit système formant une image d'une scène sensiblement à l'infini sur au moins un détecteur d'image (D) disposé sensiblement dans ledit plan focal (Pf), et comprenant un dispositif de contrôle optique, ledit dispositif comprenant :
- au moins une source (S) émettrice quasi ponctuelle disposée en périphérie dudit détecteur (D) et sensiblement dans ledit plan focal (Pf),
- un élément (10) réfléchissant et de surface plane,
- ledit élément (10) étant disposé en amont dudit système optique d'imagerie (101) en considérant le sens de propagation des rayons lumineux provenant de ladite scène, et selon une position et une inclinaison telles qu'une image de contrôle (11) de ladite source (S) réalisée par ledit système optique d'imagerie (101) et réfléchie par ledit élément (10) soit disposée sensiblement dans ledit plan focal (Pf) sur un élément de détection (D, C) relié à des moyens d'analyse de ladite image de contrôle (11) permettant d'identifier d'éventuels défauts optiques,
- ledit élément (10) présentant une forme annulaire de manière à laisser passer des rayons lumineux issus de ladite scène et traversant ladite pupille d'entrée.

2. Système optique d'imagerie (101) selon la revendication 1 dans lequel ledit élément de détection comprend un capteur (C) disposé en périphérie du détecteur image (D).

3. Système optique d'imagerie (101) selon la revendication 1 dans lequel ledit élément de détection comprend un desdits détecteurs d'image (D)

4. Système optique d'imagerie (101) selon l'une des revendications précédentes comprenant un télescope comprenant au moins un premier miroir collecteur asphérique (M1) et un deuxième miroir (M2).

5. Système optique d'imagerie (101) selon l'une des revendications précédentes comprenant un télescope de type « TMA ».

6. Système optique d'imagerie (101) selon les revendications 4 ou 5 dans lequel ledit élément (10) est disposé autour du deuxième miroir (M2).

7. Système optique d'imagerie (101) selon les revendications 4 ou 5 dans lequel ledit élément (10) est disposé à une distance proche du premier miroir (M1) de manière à minimiser l'effet de diminution du diamètre utile de ladite pupille d'entrée.

8. Système optique d'imagerie (101) selon l'une des revendications précédentes dans lequel ladite source (S) comprend une première fibre optique disposée dans un premier plan perpendiculaire à l'axe optique et une deuxième fibre optique disposée dans un deuxième plan parallèle au premier plan et décalé par rapport à ce premier plan, le premier et deuxième plan étant disposé au voisinage du plan focal (Pf), les deux images de contrôle défocalisées permettant de déterminer un signe de l'aberration optique du système d'imagerie.

9. Système optique d'imagerie (101) selon l'une des revendications précédentes dans lequel ledit capteur (C) est un capteur par diversité de phase.

10. Système optique d'imagerie (101) selon l'une des revendications précédentes dans lequel ledit capteur (C) effectue une première mesure de calibration de ladite image de contrôle (11) lorsque ledit système d'imagerie (101) présente une qualité optique déterminée et au moins une deuxième mesure de ladite image de contrôle réalisée après une période de fonctionnement dudit système d'imagerie (101), lesdits moyens d'analyse étant adaptés pour identifier un défaut optique par comparaison entre lesdites première et deuxième mesure de ladite image de contrôle.

11. Système optique d'imagerie (101) selon l'une des revendications précédentes dans lequel ledit dispositif de contrôle optique est adapté pour identifier une défocalisation dudit système d'imagerie (101).

12. Système optique d'imagerie (101) selon l'une des revendications précédentes dans lequel ledit dispositif de contrôle optique est adapté pour identifier un désalignement d'un axe de visée dudit système d'imagerie (101).

13. Système optique d'imagerie actif (110) selon l'une des revendications précédentes comprenant en outre des moyens de commande (111,113) aptes à commander un actuateur (112, Mtt) apte à effectuer une modification dudit système optique d'imagerie (110) de manière à corriger au moins partiellement ledit défaut.

14. Système optique actif selon la revendication 13 dans lequel ledit défaut comprend une défocalisation et ledit actuateur (112) est apte à commander un déplacement d'un élément optique (M2) de manière à corriger ladite défocalisation.

15. Système optique actif selon l'une des revendications 1 à 12 dans lequel ledit défaut comprend un désalignement d'un axe de visée et comprenant en outre des moyens de commande (113) aptes à commander un actuateur de type miroir (Mtt) mobile en rotation de manière à modifier angulairement l'axe de visée afin de corriger le désalignement.

## Patentansprüche

1. Optisches Bildgebungssystem (101) mit einer Brennebene (Pf), einer optischen Achse (z), einer Eingangspupille, wobei das System ein Bild einer im Wesentlichen unendlichen Szene auf wenigstens einem Bilddetektor (D) bildet, der im Wesentlichen in der Brennebene (Pf) angeordnet ist und eine optische Steuervorrichtung umfasst, wobei die Vorrichtung Folgendes umfasst:
wenigstens eine quasi punktförmige Sendequelle (S), die auf der Peripherie des Detektors (D) und im Wesentlichen in der Brennebene (Pf) angeordnet ist,
ein reflektierendes Element (10) mit ebener Oberfläche,
wobei das Element (10) oberhalb des optischen Bildgebungssystems (101) unter Berücksichtigung der Ausbreitungsrichtung der von der Szene kommenden Lichtstrahlen und gemäß einer solchen Position und einer solchen Neigung angeordnet ist, dass ein Steuerbild (11) der Quelle (S), realisiert durch das optische Bildgebungssystem (101) und von dem Element (10) reflektiert, im Wesentlichen in der Brennebene (Pf) auf einem Detektionselement (D, C) angeordnet ist, das mit Mitteln zum Analysieren des Steuerbildes (11) verbunden ist, so dass eventuelle optische Fehler identifiziert werden können,
wobei das Element (10) eine Ringform aufweist, so dass von der Szene kommende Lichtstrahlen durchgelassen werden und die Eingangspupille durchqueren.

2. Optisches Bildgebungssystem (101) nach Anspruch 1, bei dem das Erkennungselement einen Sensor (C) umfasst, der in der Peripherie des Bilddetektors (D) angeordnet ist.

3. Optisches Bildgebungssystem (101) nach Anspruch 1, bei dem das Erkennungselement einen der Bilddetektoren (D) umfasst.

4. Optisches Bildgebungssystem (101) nach einem der vorherigen Ansprüche, das ein Teleskop umfasst, das wenigstens einen ersten asphärischen Kollektorspiegel (M1) und einen zweiten Spiegel (M2) umfasst.

5. Optisches Bildgebungssystem (101) nach einem der vorherigen Ansprüche, das ein Teleskop des Typs "TMA" umfasst.

6. Optisches Bildgebungssystem (101) nach Anspruch 4 oder 5, in dem das Element (10) um den zweiten Spiegel (M2) herum angeordnet ist.

7. Optisches Bildgebungssystem (101) nach Anspruch 4 oder 5, in dem das Element (10) in einem nahen Abstand von dem ersten Spiegel (M1) angeordnet ist, um den Verkleinerungseffekt des nützlichen Durchmessers der Eingangspupille zu minimieren.

8. Optisches Bildgebungssystem (101) nach einem der vorherigen Ansprüche, in dem die Quelle (S) eine in einer ersten Ebene senkrecht zur optischen Achse angeordnete erste optische Faser und eine zweite optische Faser umfasst, die in einer zweiten Ebene parallel zu der ersten Ebene und in Bezug auf diese erste Ebene versetzt angeordnet ist, wobei die erste und die zweite Ebene in der Nähe der Brennebene (Pf) angeordnet sind, wobei die beiden defokussierten Steuerbilder eine Ermittlung eines Vorzeichens der optischen Aberration des Bildgebungssystems zulassen.

9. Optisches Bildgebungssystem (101) nach einem der vorherigen Ansprüche, bei dem der Sensor (C) ein Phasendiversität-Sensor ist.

10. Optisches Bildgebungssystem (101) nach einem der vorherigen Ansprüche, bei dem der Sensor (C) eine erste Kalibrationsmessung des Steuerbildes (11), wenn das Bildgebungssystem (101) eine ermittelte optische Qualität aufweist, und wenigstens eine zweite Messung des Steuerbildes bewirkt, realisiert nach einer Betriebsperiode des Bildgebungssystems (101), wobei die Analysemittel zum Identifizieren eines optischen Fehlers durch Vergleichen zwischen der ersten und zweiten Messung des Steuerbildes ausgelegt sind.

11. Optisches Bildgebungssystem (101) nach einem der vorherigen Ansprüche, bei dem die optische Steuervorrichtung zum Identifizieren einer Defokussierung des Bildgebungssystems (101) ausgelegt ist.

12. Optisches Bildgebungssystem (101) nach einem der vorherigen Ansprüche, bei dem die optische Steuervorrichtung zum Identifizieren einer Fehlausrichtung einer Sichtachse des Bildgebungssystems (101) ausgelegt ist.

13. Aktives optisches Bildgebungssystem (101) nach einem der vorherigen Ansprüche, das ferner Steuermittel (111, 113) zum Steuern eines Aktuators (112, Mtt) umfasst, der eine Modifikation des optischen Bildgebungssystems (110) bewirken kann, um den Fehler wenigstens teilweise zu korrigierten.

14. Aktives optisches System nach Anspruch 13, wobei der Fehler eine Defokussierung umfasst und der Aktuator (112) eine Bewegung eines optischen Elements (M2) steuern kann, um die Defokussierung zu komigieren.

15. Aktives optisches System nach einem der Ansprüche 1 bis 12, bei dem der Fehler eine Fehlausrichtung einer Sichtachse umfasst und ferner Steuermittel (113) umfasst, die einen Aktuator des Spiegeltyps (Mtt) steuern können, der rotationsbeweglich ist, um die Sichtachse winkelmäßig zu verändern, um die Fehlausrichtung zu korrigierten.

## Claims

1. Optical imaging system (101) which has a focal plane (Pf), an optical axis (z), an entrance pupil, the system forming an image of a scene to the infinite on at least one image detector (D) which is arranged substantially in the focal plane (Pf), and comprising an optical control device, the device comprising:
at least one quasi-point emission source (S) arranged at the periphery of the detector (D) and substantially in the focal plane (Pf),
a reflective element (10) which has a planar surface,
the element (10) being arranged upstream of the optical imaging system (101) taking into account the propagation direction of the light rays originating from the scene, and in accordance with a position and an inclination such that a control image (11) of the source (S), produced by the optical imaging system (101) and reflected by the element (10), is arranged substantially in the focal plane (Pf) on a detection element (D, C) which is connected to analysis means for the control image (11), enabling possible optical defects to be identified,
the element (10) having an annular form in order to allow the passage of light rays originating from the scene and passing through the entrance pupil.

2. Optical imaging system (101) according to claim 1, wherein the detection element comprises a sensor (C) which is arranged at the periphery of the image detector (D).

3. Optical imaging system (101) according to claim 1, wherein the detection element comprises one of the image detectors (D).

4. Optical imaging system (101) according to any one of the preceding claims, comprising a telescope which comprises at least a first aspherical collection mirror (M1) and a second mirror (M2).

5. Optical imaging system (101) according to any one of the preceding claims comprising a telescope of the "TMA" type.

6. Optical imaging system (101) according to claim 4 or claim 5, wherein the element (10) is arranged around the second mirror (M2).

7. Optical imaging system (101) according to claim 4 or claim 5, wherein the element (10) is arranged at a distance close to the first mirror (M1) so as to minimise the effect of reducing the useful diameter of the entrance pupil.

8. Optical imaging system (101) according to any one of the preceding claims, wherein the source (S) comprises a first optical fibre which is arranged in a first plane perpendicular to the optical axis and a second optical fibre which is arranged in a second plane which is parallel with the first plane and which is offset relative to this first plane, the first and second plane being arranged in the vicinity of the focal plane (Pf), the two defocused control images enabling a sign of the optical aberration of the imaging system to be determined.

9. Optical imaging system (101) according to any one of the preceding claims, wherein the sensor (C) is a phase diversity sensor.

10. Optical imaging system (101) according to any one of the preceding claims, wherein the sensor (C) carries out a first calibration measurement of the control image (11) when the imaging system (101) has a determined optical quality and at least a second measurement of the control image carried out after an operating period of the imaging system (101), the analysis means being capable of identifying an optical defect by means of comparison between the first and second measurements of the control image.

11. Optical imaging system (101) according to any one of the preceding claims, wherein the optical control device is adapted to identify a defocusing of the imaging system (101).

12. Optical imaging system (101) according to any one of the preceding claims, wherein the optical control device is capable of identifying a misalignment of an axis of sight of the imaging system (101).

13. Active optical imaging system (101) according to any one of the preceding claims, further comprising control means (111, 113) which are capable of controlling an actuator (112, Mtt) which is capable of carrying out a modification of the optical imaging system (110) in order to at least partially correct the error.

14. Active optical system according to claim 13, wherein the defect comprises a defocusing and the actuator (112) is capable of controlling a movement of an optical element (M2) in order to correct the defocusing.

15. Active optical system according to any one of claims 1 to 12, wherein the defect comprises a misalignment of an axis of sight and further comprising control means (113) which are capable of controlling an actuator of the mirror type (Mtt) which can be moved in rotation in order to angularly modify the axis of sight in order to correct the misalignment.
